# EUROPEAN PATENT SPECIFICATION

(11) **EP 3 163 806 B1**
(45) Date of publication and mention of the grant of the patent: **04.12.2019**
(21) Application number: 16196940.7
(22) Date of filing: 02.11.2016
(51) Int. Cl.: H04L 12/28

(54) **ELECTRICAL CONNECTION SOCKET**
ELEKTROANSCHLUSSSTECKDOSE
PRISE DE CONNEXION ÉLECTRIQUE

(30) Priority: 02.11.2015 PT 15108926
(43) Date of publication of application: 03.05.2017
(73) Proprietor: EDP Comercial - Comercializacao de Energia, S.A., 1250-162 Lisbon (PT)
(72) Inventor: Neves Geirinhas Rocha, Pedro Manuel, 2795-038 Linda-a-Velha (PT); Coelho de Moura Antunes, Tiago Miguel Baltazar, 1990-366 Lisbon (PT); da Silva Coutinho, António José, 1249-300 Lisbon (PT); Pereira Reis, João Filipe, 3800-011 Aveiro (PT); dos Santos Abreu, Victor, 3810-167 Vilar (PT); Magalhães Adão, Pedro, 2780-134 Oeiras (PT)
(74) Representative: Ferreira, Maria Silvina

(56) References cited:
- WO-A1-2012/089710
- WO-A2-2007/069241
- CN-A- 105 276 757
- CN-U- 204 028 223
- Anonymous: "Always forget to turn plugs off? Here are five smart plugs with smartphone support", , 24 April 2015 (2015-04-24), XP055344985, Retrieved from the Internet: URL:http://www.pocket-lint.com/news/133631 -always-forget-to-turn-plugs-off-here-are- five-smart-plugs-with-smartphone-control [retrieved on 2017-02-13]

## Description

### Technical domain

The present application describes an electrical connection socket, emitter of infrared command signals, and its operation mode.

### Background

Until recently, the control of air-conditioned systems and multimedia systems in the residential sector was carried out by one out of two processes: infrared remote control or local control. Each one of these ways of control present some limitations, namely due to the fact that they require the user to be on site or in its vicinity. In other words, they don't allow, for example, an appliance that has been left on unintentionally to be turned off remotely nor, for example, to switch on the air conditioner before the user gets home. Moreover, the interaction interfaces of such equipment are very limited. For example, most of the air-conditioned users do not use timetables, bringing comfort and efficiency losses, even though these functions are available on the control units.

Recently, some new appliances for the domestic sector started to include Wi-Fi or other communication means, which may be connected directly or via other devices to the client's local network, and which enable remote control via internet, having improved interfaces, solving the referred problems. An example of that are the smart plugs described in http://www.pocket-lint.com/news/133631-always-forget-to-turn-plugs-off-here-are-five-smart-plugs-with-smartphone-control. However, most of the air-conditioned and multimedia systems installed don't have this function integrated in an efficient way in the already existing equipment.

Known from the state of the art are various types of emitting modules that send infrared signals to control air-conditioned equipment, multimedia systems or other equipment, allowing equipment control and actuation from distant locations, which was formerly not possible.

Nevertheless, some appliances can't be adequately controlled by powering them down. Actually, if the electrical power supply of an air-conditioned system is, for example, interrupted and later again re-established, in case of older models the appliance is not going to work according to the parameters programmed prior to the power interruption. This means that it is not possible to adequately control it by simply powering it down. This is also the case of a television or a digital television decoder. If power supply is interrupted then the mentioned device is switched off, but after being again powered on it won't operate in the same mode as before the power interruption, being normally needed to switch on again the television on the remote control after electric power supply having been re-established. In the same way, if a music apparatus is playing a CD and the power supply is interrupted for some time, the CD will not continue playing. Moreover, some equipment, including the air conditioner, should not be controlled by power down also for lifetime reasons. Some manufacturers recommend not to frequently cut-off the power supply because it may reduce the lifetime of the electronic control boards.

The already known emitters from the state of the art present several disadvantages. One of them relies on the fact that the installation of an equipment for such purpose, which requires communication means, power supply, infrared commands emission, control logic, etc, eventually represents a significant cost of the desired function. Furthermore, some of these emitters are battery-powered which means that it is necessary to change or charge the batteries periodically. Moreover, operating on batteries reduces the amount of energy the emitter may consume. As an alternative, some emitters are powered via a connection to an electrical socket, either in a direct way or via an electrical cable and plug, or have an external power source, for example a transformer, connected to the socket that connects to the emitter by means of an electrical cable. In any one of these options there is an electrical socket that is going to be used for this purpose, which was formerly available to connect other equipment. Moreover, the second and third options have little aesthetic appeal.

The document WO2007069241 describes a switching device for a home appliance which is adapted to receive a precondition for operating the appliance connected to it wherein said precondition includes at least one variable, wherein the values of said at least one precondition variable is extracted from an Internet site.

The document WO2012089710 describes an infrared remote control system, allowing the control of one or more appliances from a portable wireless processing device, such as a smart phone, and more particularly to a system which includes a manager computing device with capabilities for receiving ad transmitting RF signals, and having access to a remote database for downloading updated infrared codes.

Internet citation XP055344985, 24 April 2015, with title "Always forget to turn plugs off? Here are five smart plugs with smartphone support",http://www.pocket-lint.com/news/133631-always-forget-to-turn-plugs-off-here-are-five-smart-plugs-with-smartphone-control, discloses five plugs which can be switched on or off remotely. The document does not disclose transmission of infrared commands and is silent with respect to transforming instructions into a language understandable by the equipment to be controlled.

The document CN204028223 discloses an intelligent WIFI remote electric power metering and WIFI remote switching device comprising a triangular plug, a housing, a multifunctional socket, an infrared or radio-frequency signal emission mouth, a mechanical on-off button and indicator lamp, an electrical equipment plug, and a WIFI remote switching and metering device. The intelligent WIFI remote electric power metering and WIFI remote switching device can allow users to timely know the power consumption amount of single electrical equipment through a wired or wireless network, and can set time and turn on/off the electrical equipment remotely, thereby achieving the purpose of energy saving and emission reducing.

### Summary

1. The present application describes an electrical connection socket according to independent claim 1.

In one embodiment, the wireless communication module (2) is configured to establish data connection with external systems.

In one embodiment, the wireless communication module (2) is configured to operate according to the standards defining the Wi-Fi, *ZigBee* or BTLE - *Bluetooth low energy* technologies.

In one embodiment, the electrical connection socket comprises a status indicator.

In one embodiment, the status indicator uses LED or OLED technology.

In one embodiment, the electrical connection socket comprises an electric consumption measurement module that is integrated in the female connection interface.

Disclosed is also an operation method of the electrical connection socket according to claim 7.

### General Description

In order to overcome the problems of the state of the art that have been identified, the present application describes an electrical connection socket able to send infrared control signals. This signal enables the control of a given equipment that is in the same room, transmitting the signal in line of sight or being reachable through reflections on the walls/other surfaces. The emitted signal will be stronger than that of the usual commands, since there is no autonomy restriction from batteries.

With this approach, the infrared control enables the access to a plurality of functions not accessible on power down. For example, when controlling an air-conditioned appliance, the operating mode may be defined, for example, cooling/heating/dehumidification, the desired temperature for the room, the ventilation speed, among others. This is the motivation and the added value of infrared control against an on/off control carried out by a controlled electrical connection socket.

The device herein presented, in its practical application scenario, is connected to a conventional socket, embedded in a wall or otherwise, by means of a male plug, and comprises:
- A control unit, having data processing capacity and comprising a wireless communication module, control electronics, memory storage space and internal clock;
- An infrared commands emitter;
- A female connection interface, to which an equipment that would normally be directly connected to a conventional socket may be connected;
- At least a control button for user's manual command;
- An internal relay or other electrical process of power interruption, allowing to switch on/off the power supplied to the female connection interface, acting as a normal switch on a wall socket having a switching on/off function;
- Optionally, at least one status indicator, which may be a LED, OLED, or another lighting technology having low energy consumption;

Optionally, the electrical connection socket may further comprise an electric consumption measurement module which is integrated in the female connection interface, to measure the consumption of the equipment connected to said female intereface.

The main functions of the proposed electrical connection socket are controlling the operating on/off cycles of an equipment connected to it either remotely or locally, receiving the commands or connecting to external systems via the wireless communication module, receiving manual commands via the manual command button, and finally emitting infrared commands to any equipment that may be controlled by such means, for example multimedia or air-conditioned equipment. As examples of external systems one can mention a server, hosted on internet, accessed via a web address or a mobile application in order to provide an interface to the user. As another example of connection to external systems, the electrical connection socket may be connected to other local home automation equipment. Communications may be of various types depending on the implementation adopted, for example Wi-Fi, *ZigBee,* BTLE, among others.

As a practical implementation scenario, the electrical equipment is connected to an electrical connection socket. Such socket has on its surface a zone made of polymer or composite material permeable to infrared signals which protects a lower zone where a set of infrared LEDs that emit the signal is disposed. These signals may be of high intensity since there is no energy restriction in the emission thereof.

The control signals to be emitted are kept stored in the memory of the electrical connection socket control unit, being it possible to updated them from the exterior via the wireless communication module. In practical terms, the user controls an equipment that may be either connected to the electrical connection socket or not, by interacting on the configuration portal, hosted in a server on internet, and that may be accessed for example via a mobile application executed on the user's smartphone. Thereby it is established that one specific socket is controlling, for example, an air-conditioning appliance of a certain brand and model. The portal then provides a command interpreter (driver) which transforms an instruction given by the user into an infrared signal to be transmitted, that is in accordance to the requirements of said appliance to be controlled. For example, via the mobile application running in his/her smartphone, the user programs the instruction "Air conditioner of the living room set to cooling, at 22°C and maximum ventilation". This command is sent via the server to the electrical connection socket, which is meanwhile provided with the specific driver for the appliance to be controlled, transforming that instruction into a set of instructions coded in a language understandable by that air conditioner model and the command is sent via the infrared emitter incorporated in the electrical connection socket.

The advantages of this equipment are:
- Being powered directly from the network power supply, and thereby able to use infrared signals emitting power that is much higher than what would be practical using batteries, enabling to profit from reflection on the walls and other surfaces in a more efficient way;
- Because it is connected directly to a conventional socket, the solution is aesthetically well succeeded, not having any cables or power sources visible;
- It performs the functions of an intelligent socket, namely consumption measurement and control of any equipment that will be connected thereto;
- It doesn't block any conventional socket since the device itself provides a female connection interface;
- It may command any equipment able to be infrared controlled, via the emission of the respective signals, once coded, as long as such equipment is within the reach of direct or reflected emission of the infrared signals emitted by this device;
- Because it has several functions combined in one single equipment, the cost of the common components (electrical supply, box, communications module, control logic) is spread over the functions of intelligent socket and infrared control, rendering the ratio "value to the user / cost" more attractive.

### Brief description of the figures

For an easier understanding of the art, figures are appended, which depict preferred embodiments that, however, are not meant to limit the object of the present application.

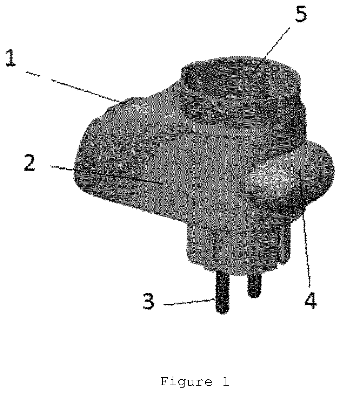

Figure 1 describes a perspective view of an embodiment of the electrical connection socket, wherein the reference numbers refer to the following elements:
1 - status indicator;
2 - wireless communications module;
3 - male plug to connect to the conventional electrical socket;
4 - infrared commands emitter;
5 - female connection interface.

### Description of embodiments

Hereinafter, some embodiments will be described in a more detailed way which are not intended, however, to limit the scope of the present application.

The present disclosure describes an electrical connection socket which, in a practical application scenario, is connected to a conventional socket, embedded in a wall or otherwise, by means of a male plug (3), and comprising the following components:
- A control unit, having data processing capacity, and comprising a wireless communication module (2), control electronics, memory storage space and internal clock;
- An infrared commands emitter (4);
- A female connection interface (5), to which the equipment that would normally be directly connected to a conventional socket is connected;
- At least one control button of the relay type allowing to switch on/off the power supplied to the female connection interface (5), acting as a normal switch on a wall socket having a switching on/off function;
- Optionally, at least one status indicator (1), which may be a LED, OLED, or another lighting technology having low energy consumption;

Optionally, the electrical connection socket may further comprise an electric consumption measurement module which is integrated in the female connection interface (5).

In one embodiment of the electrical connection socket, the wireless communication module is adapted to establish communications according to *ZigBee* standard, by which it connects to a house automation system, wherein the exterior body of such socket comprises a plastic part permeable to infrared signals through which signals to control air-conditioned appliances, multimedia systems or other systems are emitted.

Another embodiment of this technology is similar to the previous one but here the equipment is directly connected to the domestic Wi-Fi network and from there to the internet.

## Claims

1. Electrical connection socket, adapted to control an electrical equipment, having a male type plug (3), a female connection interface (5) and at least one control button comprising:
- A control unit, having data processing capacity, comprising a wireless communication module (2), control electronics, memory storage space and internal clock; and
- An infrared commands emitter (4);
**characterized in that**
- Said electrical connection socket is adapted to receive by the wireless communication module (2) an instruction of a user and a driver associated to the equipment to be controlled;
- whereby said driver is adapted to transform said instruction into set of instructions coded in a language understandable by the equipment to be controlled;
- the infrared commands emitter (4) is configured to send said set of instructions.

2. Electrical connection socket according to claim 1, **characterized in that** the wireless communication module (2) is configured to establish data connection with external systems.

3. Electrical connection socket according to claim 2, **characterized in that** the wireless communication module (2) is configured to operate according to the standards defining the Wi-Fi, *ZigBee* or BTLE - *Bluetooth low energy* technologies.

4. Electrical connection socket according to claim 1, **characterized in that** it comprises a status indicator (1) .

5. Electrical connection socket according to the preceding claim, **characterized in that** the status indicator (1) uses LED or OLED technology.

6. Electrical connection socket according to any one of the preceding claims, **characterized in that** it comprises an electric consumption measurement module integrated in the female connection interface (5).

7. Operation method of the electrical connection socket claimed on claims 1 to 6, **characterized in that**:
- An external server, accessed via a configuration portal hosted on a web page, sends to the electrical connection socket control unit an instruction of a user and a driver associated to the equipment to be controlled, being it either directly connected to the female connection interface (5) of the electrical connection socket or remotely and within the reach of the infrared emitter (4);
- Whereby said instruction of a user and said driver are received by the wireless communication module (2) of the electrical connection socket;
- Whereby said driver transforms said instruction into a set of instructions coded in a language understandable by the equipment to be controlled;
- the infrared commands emitter sends said set of instructions.

## Patentansprüche

1. Elektrische Anschlussdose, die zur Steuerung einer elektrischen Einrichtung geeignet ist und einen Stecker (3), eine Anschlussbuchsen - Schnittstelle (5) und mindestens eine Steuertaste aufweist, bestehend aus:
- Einer Steuereinheit mit Datenverarbeitungskapazität, bestehend aus einem drahtlosen Kommunikationsmodul (2), einer Steuerelektronik, einem Speicherplatz und einer internen Uhr; und
- Einem Infrarotsender von Steuerbefehlen (4), **dadurch gekennzeichnet, dass**
- Die besagte elektrische Anschlussdose geeignet ist, eine Anweisung eines Benutzers über das drahtlose Kommunikationsmodul (2) zu empfangen und einen Treiber aufweist, der mit der zu steuernden Einrichtung verbunden ist;
- wobei der besagte Treiber geeignet ist, die besagte Anweisung in eine Reihe von Anweisungen in kodifizierter Sprache umzuwandeln, die für die zu steuernde Einrichtung verständlich ist;
- der Infrarotsender von Steuerbefehlen (4) konfiguriert ist, die besagte Reihe von Anweisungen zu senden.

2. Elektrische Anschlussdose gemäß Anspruch 1, **dadurch gekennzeichnet, dass** das drahtlose Kommunikationsmodul (2) konfiguriert ist, um eine Datenverbindung mit externen Systemen herzustellen.

3. Elektrische Anschlussdose gemäß Anspruch 2, **dadurch gekennzeichnet, dass** das drahtlose Kommunikationsmodul (2) konfiguriert ist, um in Übereinstimmung mit den Standards Wi-Fi, ZigBee oder BTLE - Bluetooth Niedrigenergie - Technologien betrieben zu werden.

4. Elektrische Anschlussdose gemäß Anspruch 1, **dadurch gekennzeichnet, dass** sie eine Statusanzeige (1) aufweist.

5. Elektrische Anschlussdose gemäß dem vorherigen Anspruch, **dadurch gekennzeichnet, dass** die Statusanzeige (1) eine LED oder OLED Technologie verwendet.

6. Elektrische Anschlussdose gemäß einem der vorstehenden Ansprüche, **dadurch gekennzeichnet, dass** sie ein elektrisches Verbrauchsmessung-Modul aufweist, welches in die Anschlussbuchsen - Schnittstelle (5) integriert ist.

7. Funktionsweise der in den Ansprüchen 1 bis 6 erwähnten elektrischen Anschlussdose, **dadurch gekennzeichnet, dass**:
- Ein externer Server, der über ein, auf einer Webseite basiertes Konfigurationsportal zugänglich ist, eine Anweisung eines Benutzers an die Steuereinheit der elektrischen Anschlussdose sendet und ein Treiber mit der zu steuernden Einrichtung verbunden ist, wobei diese entweder direkt mit der Anschlussbuchsen - Schnittstelle (5) der elektrischen Anschlussdose verbunden ist oder entfernt davon und innerhalb der Reichweite des Infrarotsenders liegt (4).
- Wobei die besagte Anweisung eines Benutzers und der besagte Treiber vom drahtlosen Kommunikationsmodul (2) der elektrischen Anschlussdose empfangen werden;
- Wobei der besagte Treiber die besagte Anweisung in eine Reihe von Anweisungen in kodifizierter Sprache umwandelt, die für die zu steuernde Einrichtung verständlich ist;
- der Infrarotsender von Steuerbefehlen die besagte Reihe von Anweisungen sendet.

## Revendications

1. Prise de connexion électrique, adaptée pour commander un équipement électrique, ayant une fiche de type mâle (3), une interface de connexion femelle (5) et au moins un bouton de commande comprenant :
- une unité de commande, ayant une capacité de traitement de données, comprenant un module de communication sans fil (2), un dispositif électronique de commande, un espace de stockage en mémoire et une horloge interne ; et
- un émetteur de commandes à infrarouges (4); **caractérisé en ce que**
- ladite prise de connexion électrique est adaptée pour recevoir par le module de communication sans fil (2) une instruction d'un utilisateur et d'un pilote associés à l'équipement à commander ;
- où ledit pilote est adapté pour transformer ladite instruction en un ensemble d'instructions codées dans un langage compréhensible par l'équipement à commander ;
- l'émetteur de commandes à infrarouges (4) est configuré pour envoyer ledit ensemble d'instructions.

2. Prise de connexion électrique selon la revendication 1, **caractérisée en ce que** le module de communication sans fil (2) est configuré pour établir une connexion de données avec des systèmes externes.

3. Prise de connexion électrique selon la revendication 2, **caractérisée en ce que** le module de communication sans fil (2) est configuré pour fonctionner selon les normes de définition des technologies Wi-Fi, ZigBee ou BTLE - Bluetooth basse énergie.

4. Prise de connexion électrique selon la revendication 1, **caractérisée en ce qu'**elle comporte un indicateur d'état (1) .

5. Prise de connexion électrique selon la revendication précédente, **caractérisée en ce que** l'indicateur d'état (1) utilise la technologie LED ou OLED.

6. Prise de connexion électrique selon l'une quelconque des revendications précédentes, **caractérisée en ce qu'**elle comprend un module de mesure de consommation électrique intégré à l'interface de connexion femelle (5).

7. Procédé de fonctionnement de la prise de connexion électrique selon les revendications 1 à 6, **caractérisé en ce que** :
- Un serveur externe, accessible via un portail de configuration hébergé sur une page Web, envoie à l'unité de commande de prise de connexion électrique une instruction d'un utilisateur et un pilote associé à l'équipement à contrôler, qu'il soit directement connecté à l'interface de connexion femelle (5) de la prise de connexion électrique ou à distance et à portée de l'émetteur infrarouge (4) ;
- où ladite instruction d'un utilisateur et ledit pilote sont reçus par le module de communication sans fil (2) de la prise de connexion électrique ;
- où ledit pilote transforme ladite instruction en un ensemble d'instructions codées dans un langage compréhensible par l'équipement à commander ;
- l'émetteur de commandes à infrarouges envoie ledit ensemble d'instructions.
